# EUROPEAN PATENT APPLICATION

(11) **EP 4 307 163 A1**
(43) Date of publication of application: **17.01.2024**
(21) Application number: 22767107.0
(22) Date of filing: 07.03.2022
(51) Int. Cl.: G06K 7/10, G07G 1/00, H04B 5/00

(54) **READING DEVICE, ANTENNA, READING STAND, STORAGE SHELF, AND READING GATE**

(30) Priority: 08.03.2021 JP 2021036778
(71) Applicant: Asterisk, Inc., Osaka-shi, Osaka 532-0011 (JP)
(72) Inventor: SUZUKI Noriyuki, Osaka-shi, Osaka 532-0011 (JP)
(74) Representative: TBK
(86) International application number: PCT/JP2022/009833
(87) International publication number: WO 2022/191153

(57) **Abstract**

Provided is a reading device that prevents the reduction in reading efficiency without damaging an article to be read. A reading device 120 reads information from a RF tag 5 attached to a commodity M. The reading device 120 reads information from the RF tag 5 while moving the antenna 121 relative to the RF tag 5.

## Description

### Technical Field

The present invention relates to reading devices, antennas, reading stands, storage shelves, and reading gates to read information from an RF tag.

### Background Art

The use of RFID technology is on the rise in different fields, including manufacturing, logistics, and retail. In the retail field, for example, POS cash register terminals have been conventionally used, which are equipped with a reading device that reads barcodes attached to products picked up by a customer one by one. In this field, a reading device is used in these years to read all the RF tags attached to the picked-up products at once, reducing the time required to read commodity information and reducing the operator's job.

Patent Literature 1 describes a reading device that has a closed space defined by a box and an opening/closing cover to accommodate a commodity to be read and irradiate the commodity placed in a placing table with radio waves from an antenna placed in the box, while swaying the placing table. The reading device according to Patent Literature 1 moves the commodity with the swaying of the placing table, thus preventing a reduction in the reading efficiency due to the null points of the antenna.

### Citation List

### Patent Literature

Patent Literature 1: JP 2016-012211 A

### Summary of Invention

### Technical Problem

The reading device described in Patent Literature 1, however, may damage the commodity on the placing table due to the swinging of the placing table. In view of these problems, the present invention aims to provide a reading device, an antenna, a reading stand, a storage shelf, and a reading gate that prevent the above-mentioned reduction in reading efficiency without damaging the article to be read. Solution to Problem

To achieve the above aim, a reading device of the present invention reads information from a RF tag attached to an article, and includes: a moving section that moves the antenna relative to the RF tag; and a reading section that reads information from the RF tag while the antenna is moving.

An antenna according to the present invention is used in the reading device.

A reading stand according to the present invention includes: a container that accommodates the article; and the reading device, wherein the antenna is disposed to emit radio waves toward the container.

A storage shelf according to the present invention includes: a shelf that accommodates the article; and the reading device disposed at the shelf.

A reading gate according to the present invention includes: a gate body placed above a conveyance path, on which the article is conveyed; and the reading device disposed at the gate body, and including the antenna disposed to emit radio waves toward the conveyance path.

### Advantageous Effects of Invention

The present invention prevents the reduction in reading efficiency without damaging an article to be read.

### Brief Description of Drawings

Fig. 1(a) is a perspective view of a reading stand according to a first embodiment of the present invention, and (b) is a cross-sectional view of the reading stand.
Fig. 2 is a block diagram of the reading device that the reading stand includes.
Fig. 3(a) illustrates a modification example 2 of the reading device, (b) illustrates a modification example 3 of the reading device, and (c) illustrates a modification example 4 of the reading device.
Fig. 4 is a perspective view of a storage shelf according to a second embodiment of the present invention.
Fig. 5 is a perspective view of a storage shelf according to a third embodiment of the present invention.
Fig. 6(a) is a side view of a reading gate according to a fourth embodiment of the present invention, and (b) is a perspective view of a gate body of the reading gate.

### Description of Embodiments

### [First embodiment]

Referring to the drawings, the following describes a reading stand and a reading device according to a first embodiment of the present invention.

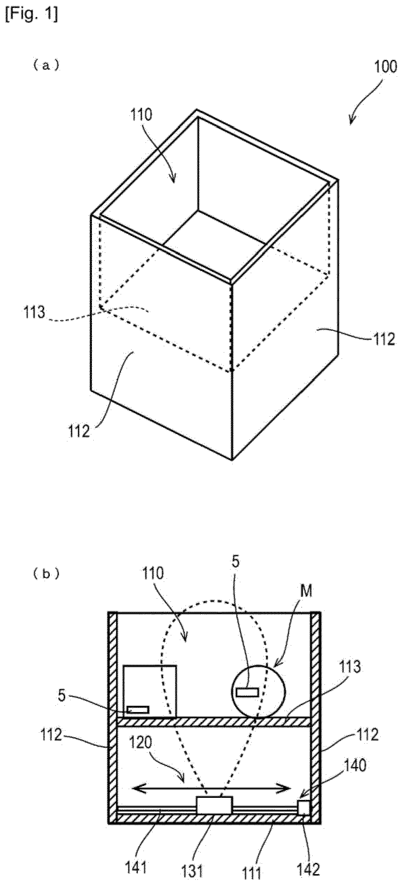

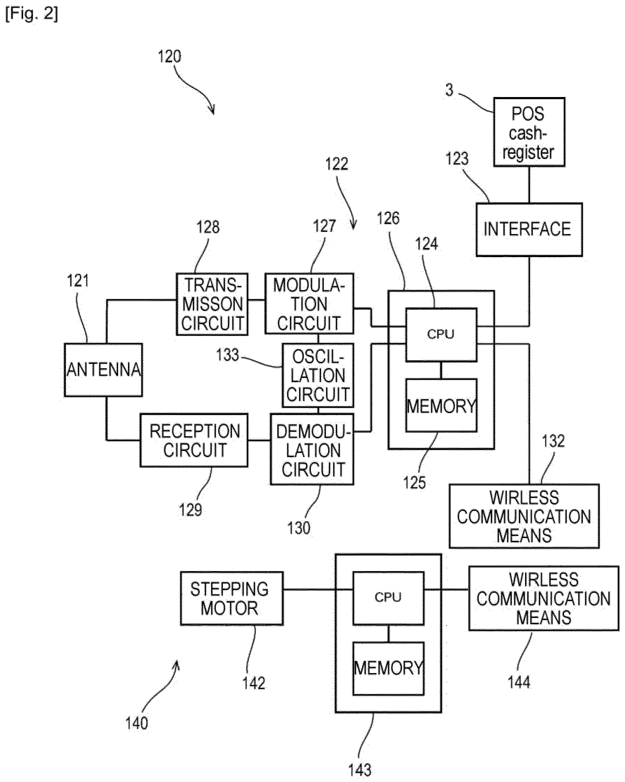

As shown in Fig. 1, a reading stand 100 according to the first embodiment is a stationary stand that is connected for use to a POS cash register 3 (Fig. 2) installed in a store. This reading stand 100 reads information on a commodity M carried by a customer from a RF tag 5 attached to the commodity M. This reading stand 100 includes a container 110 that accommodates the commodity M, and a reading device 120 placed below the container 110.

Specifically, the reading stand 100 of the present embodiment has a configuration having a mount 113 placed in a housing made up of a bottom plate 111 and four side walls 112. On this mount 113, a commodity M and a commodity-containing shopping cart (hereinafter they are collectively referred to as commodity M) are placed. The components (the bottom plate 111 and side walls 112) making up the housing is typically made of wood, which may be made of plastic or metal. The bottom plate 111 of the housing is rectangular, and Fig. 1 illustrates the mode of the bottom plate 111 just placed on the installation position. The bottom plate 111 may have casters attached thereto with a locking mechanism. The four side walls 112 extend vertically upward from the edges of the bottom plate 111, and are placed in a square shape so as to surround the commodity M. The mount 113 is a non-metallic plate through which radio waves can pass, and is placed above the bottom plate 111 at a height in the middle of the side walls 112. The mount 113 is supported by the side walls 112 to have a horizontal posture so that a commodity M can be placed thereon. These mount 113 and four side walls 112 define the container 110 that accommodates a commodity M. The container 110 is located at the upper part of the housing, and opens upward. The bottom plate 111, side walls 112 and mount 113 surround a space, in which a reading device 120 is accommodated.

The reading device 120 is a built-in device that is incorporated into the housing. As shown in Fig. 2, the reading device 120 includes an antenna 121 that radiates communication radio waves for communications with the RF tag 5, and a reader/writer body 122 connected to the antenna 121.

The antenna 121 outputs communication radio waves for communications with the RF tag 5 toward the container 110, and preferably outputs communication radio waves in the UHF band. The reading device 120 may have one antenna 121 or may have a plurality of antennas 121.

The reader/writer body 122 of the present embodiment performs command and data communications with the POS cash register 3 using an interface 123 such as a wireless LAN. The interface 123 may be a wired LAN or RS232C. Specifically, the reader/writer body 122 includes a microcomputer 126 including a CPU 124 and a memory 125, a modulation circuit 127, a transmission circuit 128, a reception circuit 129, a demodulation circuit 130, and an oscillation circuit 133. The modulation circuit 127 modulates commands and data output from the microcomputer 126 by superimposing them on a predetermined carrier wave generated by the oscillation circuit 133. The transmission circuit 128 is connected to the output of the modulation circuit 127. The transmission circuit 128 amplifies a signal output from the modulation circuit 127 into a signal suitable for antenna 121, and attenuates unnecessary frequencies. The reception circuit 129 receives a carrier wave through the antenna 121, extracts a necessary signal from the received carrier wave, and amplifies the signal. The demodulation circuit 130 is connected to the output of the reception circuit 129 and demodulates a signal output from the reception circuit 129 and inputs it to the microcomputer 126.

These reader/writer body 122 and antenna 121 are placed in the same case and function as a reading unit 131 (Fig. 1) that reads information from the RF tag 5. The reading unit 131 includes a secondary battery (not shown) therein that supplies power to the reader/writer body 122. The mode of power supply to the secondary battery is not particularly limited. For instance, the reading stand 100 may include a power receiving electrode placed on the case surface of the reading unit 131, and a power feeding electrode placed at the standby position of the reading unit 131. When the reading unit 131 is on standby at a predetermined position, an external power source may supply power to the secondary battery via these electrodes.

The reading device 120 of the present embodiment further includes a moving device that functions as a moving section that moves the antenna 121. For instance, the moving device is a linear motion device 140 that linearly moves the reading unit 131 from one end of the bottom plate 111 to the other end. This linear motion device 140 includes a ball screw 141 (Fig. 1) placed on the top surface of the bottom plate 111 to stretch across the bottom plate 111, a stepping motor 142 connected to one end of the ball screw 141, a movable body (not shown) attached to the ball screw 141, and a microcomputer 143 that controls the rotation of the stepping motor 142. The microcomputer 143 is communicably connected to the reader/writer body 122 by a wireless communication means 144 such as Bluetooth (registered trademark), and when the microcomputer 143 receives a linear motion command from the reader/writer body 122, it outputs a pulse signal to the stepping motor 142. This pulse signal controls the rotation angle and rotation speed of the stepping motor 142. The stepping motor 142 rotates the ball screw 141 at a rotation angle and speed in accordance with the pulse signal input from the microcomputer 143. As the ball screw 141 rotates, the movable body reciprocates between one end and the other end of the bottom plate 111. The movable body has the reading unit 131 attached thereto, so that the antenna 121 also reciprocates together with the movable body.

The reading device 120 configured as described above executes reading process when receiving a command from the POS cash register 3 while having a commodity M carried by a customer placed in the container 110. The reading process reads information from the RF tag 5 of each commodity M accommodated in the container 110 while moving the reading unit 131, and includes movement process and communication process.

The movement process moves the reading unit 131. In this process, the CPU 124 of the reader/writer body 122 outputs a motion command (linear motion command) to the microcomputer 143 of the moving device (linear motion device 140) via the wireless communication means 132. Upon receiving the motion command (linear motion command), the microcomputer 143 of the moving device outputs a pulse signal to the stepping motor 142.

The communication process performs a communication with the RF tag 5 to obtain information. In this process, when the CPU 124 of the reader/writer body 122 receives a command from the POS cash register 3, the CPU 124 outputs a communication signal to receive information from the RF tag 5. This communication signal is output from the antenna 121 via the modulation circuit 127 and transmission circuit 128 to be a communication radio wave. The signal received from the RF tag 5 is then input to the CPU 124 via the reception circuit 129 and demodulation circuit 130. This communication process is continuously performed during execution of the movement process, that is, during the motion of the reading unit 131. This movement process ends after the reading unit 131 reciprocates a predetermined number of times.

The reading stand 100 of the present embodiment allows the reading unit 131 to automatically reciprocate from one end of the bottom plate 111 to the other end during the reading process. During the movement, the antenna 121 outputs communication radio waves to the RF tag 5. This means that the communication radio waves are radiated evenly to the entire of the mount 113, which makes up the container 110. Thus, null points of the antenna 121 are less likely to occur, thus preventing a reduction in reading efficiency. The antenna 121 moves relative to the container 110 (mount 113), and this eliminates a need to move the commodity M in the container 110, and does not damage the commodity M.

### <Modification Example 1>

The reading device 120 of the first embodiment moves the reading unit 131 from one end of the bottom plate 111 to the other end, and the present invention is not limited to this mode. For instance, the communication range of the communication radio waves radiated from the antenna 121 may occupy most of the container 110. In this case, the reading unit 131 may move back and forth in small motions at the center position of the bottom plate 111.

### <Modification Example 2>

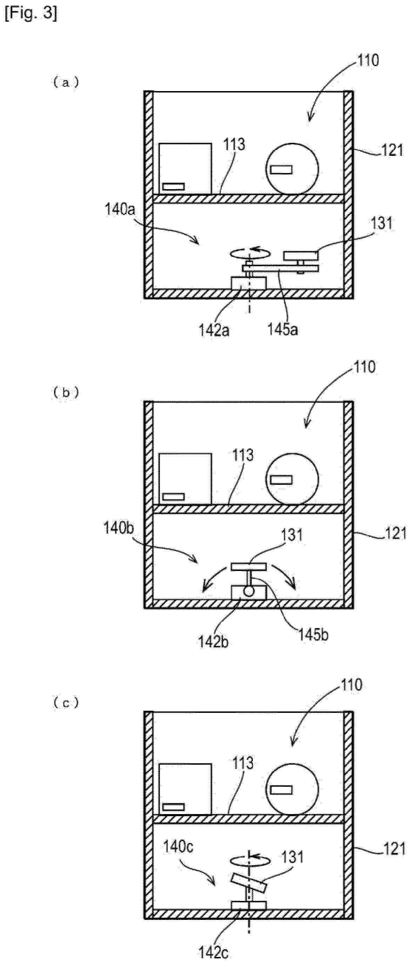

The reading device 120 of the first embodiment linearly moves the reading unit 131 from one end of the bottom plate 111 to the other end with the linear motion device 140 placed on the bottom plate 111, and the present invention is not limited to this mode. For instance, as shown in Fig. 3(a), the reading device may include a moving device that moves the reading unit 131 horizontally around a circumference. Specifically, the moving device, a circumferential device 140a, includes a motor 142a and a straight arm 145a. The motor 142a is placed at the center portion of the bottom plate 111 with its rotary shaft oriented vertically, and its rotation is controlled by a motion command (rotation command) output in the movement process of the reader/writer body 122. The straight arm 145a has one end connected to the rotary shaft of the motor 142a, and extends straight horizontally. The reading unit 131 is attached to the other end of the straight arm 145a via a bearing (not shown). The circular movement of the circumferential device 140a moves the antenna 121 circumferentially above the bottom plate 111 with the main radiation direction of radio waves directed directly upward. This allows the evenly radiating of communication radio waves to the entire of the container 110.

### <Modification Example 3>

In the first embodiment, modification example 1, and modification example 2 described above, the antenna 121 is placed in a posture of radiating communication radio waves for communicating with the RF tag 5 mainly directly upward. This direction of the communication radio waves emitted from the antenna 121 is not limited to directly upward, and the antenna 121 may move so that the radiating direction of the communication radio waves varies relative to the RF tag 5 (container 110) (relative to the plane formed by the coil antenna of the RF tag 5). For instance, as shown in Fig. 3(b), the reading device may include a moving device that tilts the antenna 121. A tilting device 140b that is this moving device includes a motor 142b and a straight arm 145b. The motor 142b is placed at the center portion of the bottom plate 111 with its rotary shaft oriented horizontally, and its rotation is controlled by a motion command (rotation command) output in the movement process of the reader/writer body 122. The straight arm 145b has one end connected to the rotary shaft of the motor 142b. The reading unit 131 is attached to the other end of the straight arm 145b. The tilting operation of the tilting device 140b causes the antenna 121 to reciprocate in a parabolic trajectory. In the process of this reciprocating motion, the main radiation direction of radio waves shifts between directly above and horizontally. This allows the evenly radiating of communication radio waves to the container 110. The RF tags 5 of the commodities M accommodated in the container 110 may overlap each other. In this case also, a change in the radiation direction allows the communication radio waves to be emitted so as to intersect with the tag planes of these RF tags 5 (the planes formed by the coil antennas of the RF tags 5), thus avoiding reading errors caused by overlapping of the RF tags 5.

### <Modification Example 4>

The reading device according to Modification Example 4 has another form of changing the radiation direction of the communication radio waves relative to the RF tag 5. As shown in Fig. 3(c), this reading device includes a moving device that rotates an antenna 121 with the radiation direction of communication radio waves directed diagonally upward. For the rotating device 140c that is a moving device, a motor 142c can typically be used. This motor 142c is placed at the center portion of the bottom plate 111 with its rotary shaft directed vertically. The reading unit 131 is attached to the tip of the rotary shaft. The reading unit 131 is attached with the tilted radiation surface, from which the communication radio waves are emitted. As the motor 142c rotates, the reading unit 131 emits the communication radio waves while rotating in a circle relative to the mount 113. This allows the evenly radiating of communication radio waves to the container 110. Similarly to Modification Example 3, in the processing of changing the radiation directions, the communication radio waves are emitted so as to intersect with the tag planes of the RF tags 5 (the planes formed by the coil antennas of the RF tags 5), thus avoiding reading errors caused by overlapping of the RF tags 5.

### <Modification Example 5>

In the reading stands 100 according to the first embodiment and modification examples 1 to 4 described above, a shield may be provided on the inner or outer surface of the housing. For instance, the shield is made of a radio-wave absorbing material that absorbs communication radio waves from the antenna 121, and is placed on the inner surface of the side walls 112 of the housing. The shield may also be a radio-wave reflective material that reflects radio waves. The housing itself may be formed of a radio-wave reflective material. For the shield, a radio-wave absorbing material may be placed inside of the radio-wave reflective material.

### <Modification Example 6>

The reading devices 120 of the reading stands 100 according to the first embodiment and modification examples 1 to 5 described above may include a weight detection sensor that functions as a detection section to detect the commodity M accommodated in the container 110. The output of the weight detection sensor is connected to the microcomputer 143 of the moving device. The microcomputer 143 determines the presence or not of a commodity M in the container 110 based on a change in the output of the weight detection sensor. If it is determined that a commodity M is present, the microcomputer 143 may start the movement of the reading unit 131. Specifically, the weight detection sensor is a load cell placed between the mount 113 and the side walls 112. This load cell between the mount 113 and the side walls 112 that support the mount 113 is configured to transmit the load of a commodity M stored in the container 110 to the load cell, and then output a signal corresponding to the total weight of the commodity M. The signal output from the load cell is input to the microcomputer 143 of the moving device via an analog-to-digital converter. The CPU of the microcomputer 143 calculates the total weight of the commodity M in the container 110 based on the input signal. Note that the CPU can change the motion mode in accordance with the calculated total weight value. For instance, when the value of the total weight is small, the CPU estimates that the number of stored commodities M is small, and outputs a pulse signal indicating a small amount of movement. When the value of the total weight is large, the CPU estimates that the number of stored commodities M is large, and outputs a pulse signal indicating a large amount of movement (large reciprocating motion). Then, the microcomputer 143 outputs a pulse signal and transmits a command to the microcomputer 126, indicating that the movement has started. When receiving the command, the microcomputer 126 executes the reading process.

### [Second embodiment]

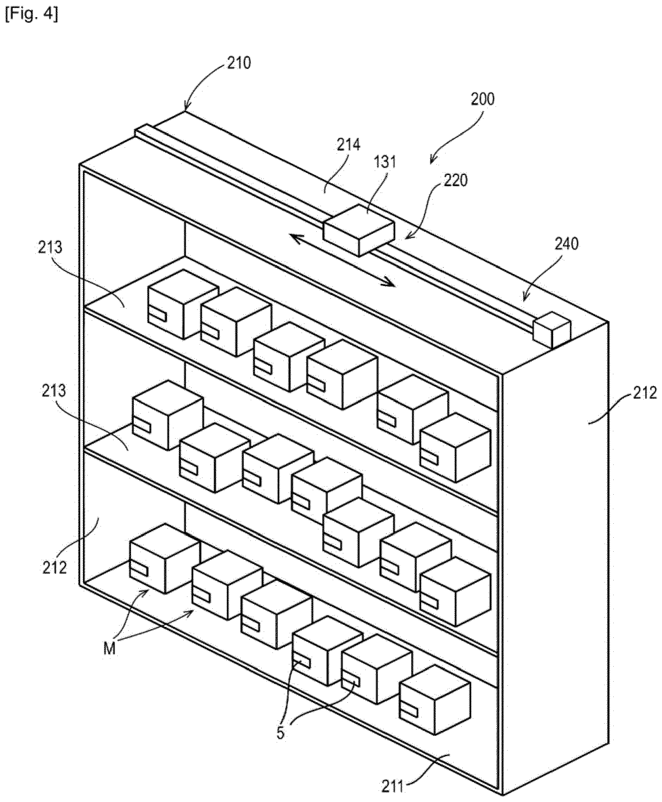

As shown in Fig. 4, a storage shelf 200 according to the second embodiment is a stationary shelf in a store, where the storage shelf stores commodities M in stock (hereinafter called stock commodities M). The storage shelf 200 includes a shelf body 210 that stores stock commodities M, and a reading device 220 that reads information on the stock commodities M from RF tags 5 attached to the stock commodities M. The shelf body 210 has a known configuration, and includes a bottom plate 211, a plurality of shelf plates 213, and a top plate 214, as well as two side plates 212 that support these plates, for example. The shelf plates 213 and bottom plate 211 function as a container that accommodates stock commodities M.

The reading device 220 of the second embodiment is similar to the reading device 120 of the first embodiment in that it includes a reading unit 131 that accommodates an antenna 121 and a reader/writer body 122, and a moving device. The reading device 220 is different from the first embodiment in that: the reading device 220 is of a mounting type that is attached to the shelf body 210; the antenna 121 emits communication radio waves directly below; and the linear motion device 240, which is a moving device, makes the antenna 121 linearly reciprocate from one end to the other end of the top plate 214. That is, this embodiment is different from the first embodiment (from the linear motion device 140) in the radiation direction of the communication radio waves and the installation position and moving distance of the linear motion device 214.

The reading device 220 of this embodiment is communicably connected to a commodity management system via an interface 123. The product management system manages the number of commodities M in stock in the store, and regularly checks the number of commodities M stored in the storage shelf 200. When the reading device 220 of the reading shelf 200 receives a request from the commodity management system, it executes the same reading process as in the first embodiment and transmits the read information on the stock commodities M to the product management system.

According to the storage shelf 200 of the present embodiment, the reading unit 131 reciprocates from one end of the top plate 214 to the other end, so that the communicating radio waves are radiated evenly to the entire shelf plates 213 and bottom plate 211, which make up the container. Thus, null points of the antenna 121 are less likely to occur, thus preventing a reduction in reading efficiency. The antenna 121 moves relative to the container (shelf plates 213), and this eliminates a need to move the stock commodities M in the container, and does not damage the stock commodities M.

### <Modification Example 7>

In the second embodiment, the reading device 220 is placed on the top surface of the top plate 214. The reading device 220 may be placed on the bottom surface of the top plate 214. The reading device 220 may be placed on a side plate 212.

### <Modification Example 8>

In the second embodiment and modification example 7, the moving device is attached to the shelf body 210. The moving device may be a fixed device that is fixed to the ceiling or floor of the room in which the shelf body 210 is installed.

### [Third embodiment]

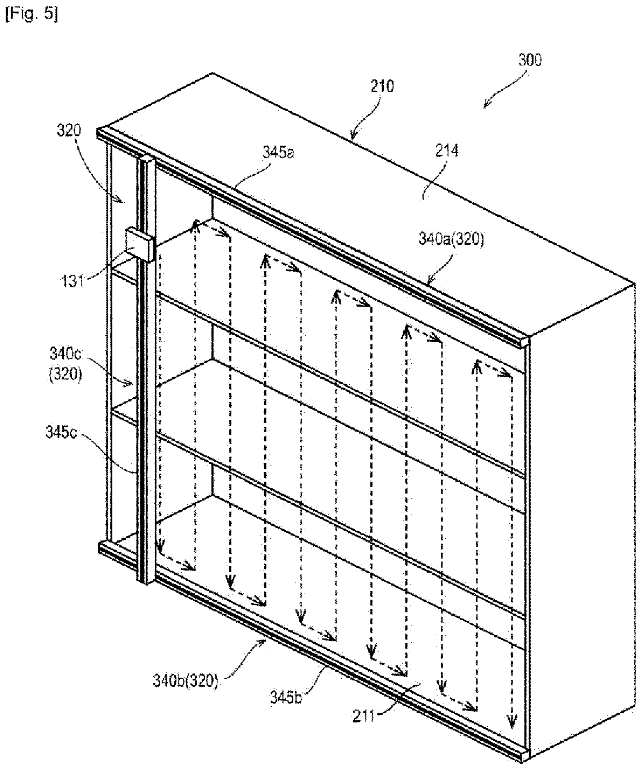

As shown in Fig. 5, similar to the second embodiment, a storage shelf 300 according to the third embodiment includes a shelf body 210 that stores stock commodities M. For convenience of explanation, Fig. 5 omits the stock commodities accommodated in the shelf body 210. The storage shelf 300 according to this embodiment includes a reading device 320. Similar to the second embodiment, the reading device 320 includes a reading unit 131 that has an antenna 121 and a reader/writer body 122. This embodiment is different from the second embodiment in that the antenna 121 radiates communication radio waves from the front face to the rear face (in the depth direction) of the shelf body 210. The moving device also is different from the first embodiment and the second embodiment in that it moves the antenna (reading unit 131) horizontally (first movement mode) and vertically (second movement mode).

Specifically, the moving device of the third embodiment includes: a first linear motion device 340a that is placed along the front edge of the top plate 214 and moves the antenna (reading unit 131) in the horizontal direction; a second linear motion device 340b that is placed along the front edge of the bottom plate 211 and moves the antenna (reading unit 131) in the horizontal direction; and a third linear motion device 340c that extends in the height direction of the shelf body 210 and moves the antenna (reading unit 131) in the vertical direction. For instance, these linear motion devices 340a, 340b, 340c each include a slide rail 345a, 345b, 345c, a ball screw (not shown) placed in the corresponding slide rail 345a, 345b, 345c, a stepping motor (not shown) at one end of the ball screw, a movable body (not shown) that slides on the corresponding slide rail 345a, 345b, 345c according to the rotation of the ball screw, and a microcomputer (not shown) that controls the stepping motor. Both ends of the third slide rail 345c are attached to the first movable body and the second movable body. Then, the reading unit 131 is attached to the movable body of the third linear motion device 340c. With this configuration, when the first linear motion device 340a and the second linear motion device 340b are driven synchronously, the reading unit 131 will move horizontally. Then, the third linear motion device 340c is driven, causing the reading unit 131 to move vertically. In each linear motion device 340a, 340b, 340c, the movable body and the slide rail 345a, 345b, 345c are also electrically connected, and the first movable body and the third slide rail 345c also are electrically connected. Similarly, the second movable body and the third slide rail 345c are electrically connected. This configuration allows the power supplied to the first slide rail 345a to be supplied to the third slide rail 345c via the first movable body. The third stepping motor is driven by the supplied power, and the power is supplied to the battery of the reading unit 131 via the third movable body.

According to the storage shelf 300 of the present embodiment, the antenna 121, which radiates communicating radio waves from the front face to the rear face of the shelf body 210, is moved by the moving device horizontally and vertically across the front face of the shelf body 210. Note that the first linear motion device 340a and second linear motion device 340b intermittently linearly control their movable bodies, and the third linear motion device 340c linearly controls the movable body at the timing when the first linear motion device and the second linear motion device stop. This causes the reading unit 131 to move up and down along the trajectory of the dashed arrows in Fig. 5, i.e., across the front face of the shelf body 210 while shifting slightly in the horizontal direction. This movement of the reading unit 131 allows the radio waves to be radiated evenly to the entire shelf body 210. Thus, null points of the antenna 121 are less likely to occur, thus preventing a reduction in reading efficiency. The antenna 121 moves relative to the container (shelf plates 213), and this eliminates a need to move the stock commodities M in the container, and does not damage the stock commodities M.

### <Modification Example 9>

In the third embodiment, the moving device (linear motion devices 340a to 340c) is attached to the shelf body 210, and the present invention is not limited to this embodiment. The moving device may be a fixed device that is fixed to the ceiling or floor of the room in which the shelf body 210 is installed. Specifically, the first linear motion device 340a may be fixed to the ceiling located above the shelf body 210, and the third linear motion device 340c may be attached to the movable body of the first linear motion device 340a. The second linear motion device 340b may be fixed to the floor where the shelf body 210 is placed, and the third linear motion device 340c may be attached to the movable body of this second linear motion device 340b.

### <Modification Example 10>

In the third embodiment and modification example 9, both the first linear motion device 340a and the second linear motion device 340b are not essential in the configuration, and these embodiments may have either one linear motion device, to which the third linear motion device 340c may be attached. For instance, these embodiments may have the moving device that includes the first linear motion device 340a and the third linear motion device 340c attached to the movable body of this first linear motion device 340a.

### <Modification Example 11>

The reading device 320 of the third embodiment stated above may further include a moving device that swings the reading unit 131 to the left and right. Specifically, the reading device 320 includes a stepping motor (not shown) between the movable body of the third linear motion device 340c and the reading unit 131. This stepping motor is placed at the movable body of the third linear motion device 340c, and has a rotary shaft extending in the vertical direction. The reading unit 131 is attached to this rotary shaft. This stepping motor rotates its rotary shaft back and forth between 0 and 180 degrees based on the signal output from the microcomputer 126 of the reading device 320. This causes the reading unit 131 to swing left and right, thus enlarging the communication area of the antenna 121 in the horizontal direction.

### <Modification Example 12>

This embodiment may include a first antenna 121 that emits communication radio waves in the depth direction of the reading shelf 210 and a second antenna that emits communication radio waves in the opposite direction to the first antenna. This allows the reading device to simultaneously read the information not only on the stock commodities M on the shelf body 210 to which the reading device 320 is attached, but also on the stock commodities M placed on another shelf body located facing the shelf body 210. The reading device 320 may also include a third antenna that emits communicating radio waves in a different direction from those of the first antenna 121 and the second antenna.

### <Modification Example 13>

The reading unit 131 may read information from the RF tags 5 and may also acquire a RSSI value (signal strength of radio waves) from the RF tags 5. The CPU 124 of the reading unit 131 associates the read information with the RSSI value and stores it in the memory 125. Then, the CPU 124 calculates the average value (average RSSI value) of the RSSI values stored in the memory 125. If a RSSI value deviates significantly from the average RSSI value, the commodity is likely to be a stock product M placed on another shelf body 210. Thus, the product information associated with such a RSSI value can be deleted from the memory 125. A RF tag 5 may be attached also to the shelf body 210. This allows the management of stock commodities M while associating their commodity information with the identification information of the shelf body 210. A RSSI value may be acquired from the RF tag 5 of the shelf body 210, and this RSSI value of the shelf may be compared with the RSSI value of a stock commodity M. This enables a determination whether the stock commodity M is on the shelf body 210.

### <Modification Example 14>

The reading unit 131 of the reading device 320 may include a position specifying unit that specifies the position relative to the RF tag 5 based on a phase change of communication radio waves resulting from the movement of the antenna 121 by the moving device. The position of the RF tag 5 is specified by the position specifying unit, which enables a determination whether the commodity is on the shelf body 210 to be read.

### <Modification Example 15>

The reading device 320 may include a weight detection sensor that is a detection section of detecting a stock commodity M accommodated in the shelf body 210. For instance, the weight detection sensor is a load cell placed below the bottom plate of the shelf body 210. The load cell receives the weight of the shelf body 210 and the accommodated stock commodities M, and then outputs a signal corresponding to the weight. The signal output from the load cell is input to the microcomputer 126 in the reading unit 131 via an analog-to-digital conversion circuit. The CPU 124 of the microcomputer 126 calculates the total weight of the stock commodities M based on the input signal. Note that the CPU124 can change the motion command for the moving device in accordance with the calculated total weight value. For instance, when the value of the total weight is small, the CPU estimates that the number of accommodated commodities is small. Then, the CPU transmits a motion command indicating a fast moving speed to the moving device, thus reducing the reading time required for the shelf body 210 as a whole.

### [Fourth embodiment]

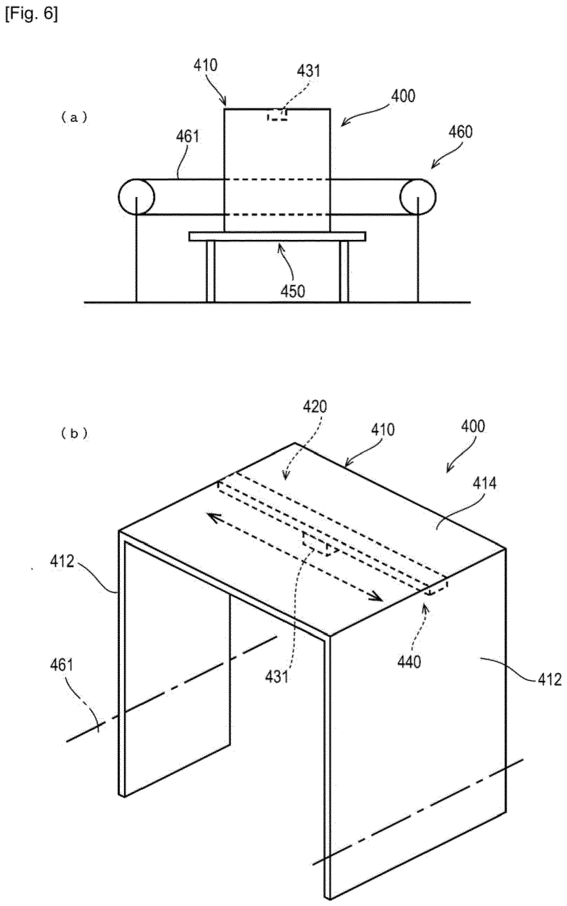

As shown in Fig. 6, a reading gate 400 according to the fourth embodiment is a stationary device that reads information on incoming or outgoing articles in logistics (hereinafter, these incoming and outgoing articles are collectively referred to as logistics articles) from RF tags attached to these articles. The reading gate 400 includes a gate body 410 that is placed at the conveyance path of a conveyor 460 that transports the articles, and a reading device 420.

The gate body 410 includes a pair of side walls 412 placed on both sides of a conveyor belt 461 of the conveyor 460, and a top plate 414 stretching over the upper ends of the pair of side walls 412. The gate body 410 in this embodiment is placed on a table 450 installed below the conveyor 460.

The components of the linear motion device 440, which is the moving device of this embodiment, are the same as those of the first embodiment. This embodiment is different from the first embodiment in that the linear motion device 440 of this embodiment is placed on the lower surface of the top plate 414 and moves the antenna 121 in a horizontal direction orthogonal to the transport direction of the conveyor 460. This embodiment also is different in that the antenna 121 emits communication radio waves downward (towards the conveyance surface of the conveyor).

According to the reading gate 400 of the present embodiment, the antenna 121 radiates communicating radio waves from the top plate 414 of the gate body 410 toward the conveyance surface of the conveyor 460, and the linear motion device 440 moves a reading unit 431 in the horizontal direction orthogonal to the conveyance direction. This means that the communication radio waves are radiated evenly to the entire of the conveyance surface. Thus, null points of the antenna 121 are less likely to occur, thus preventing a reduction in reading efficiency. The antenna 121 moves relative to the conveyor 450, and this eliminates a need to move the logistics articles on the conveyor belt, and does not damage the logistics articles.

### Reference Signs List

- M: Commodity
- 5: RF tag
- 120: Reading device
- 121: Antenna
- 122: Reader/writer body
- 140: Linear motion device (moving device)
- 140a: Circumferential device (moving device)
- 140b: Tilting device (moving device)
- 140c: Rotating device (moving device)
- 220: Reading device
- 240: Linear motion device (moving device)
- 320: Reading device
- 340a: First linear motion device (moving device)
- 340b: Second linear motion device (moving device)
- 340c: Third linear motion device (moving device)
- 420: Reading device
- 440: Linear motion device (moving device)

## Claims

1. A reading device that reads information from a RF tag attached to an article, comprising:
a moving section that moves the antenna relative to the RF tag; and
a reading section that reads information from the RF tag while the antenna is moving.

2. The reading device according to claim 1, wherein the moving section moves the antenna in a first moving mode and in a second moving mode different from the first moving mode.

3. The reading device according to claim 1 or 2, further comprising a detection section that detects the article, wherein
in response to a detection of the article, the moving section moves the antenna.

4. An antenna used in the reading device according to any one of claims 1 to 3.

5. A reading stand comprising: a container that accommodates the article; and
the reading device according to any one of claims 1 to 3, wherein the antenna is disposed to emit radio waves toward the container.

6. A storage shelf comprising: a shelf having a container that accommodates the article to be stored; and
the reading device according to any one of claims 1 to 3, the reading device being configured to emit radio waves toward the container.

7. A reading gate comprising: a gate body placed above a conveyance path, on which the article is conveyed; and
the reading device according to any one of claims 1 to 3, the reading device being disposed at the gate body, and including the antenna disposed to emit radio waves toward the conveyance path.
